# EUROPEAN PATENT APPLICATION

(11) **EP 1 331 782 A2**
(43) Date of publication of application: **30.07.2003**
(21) Application number: 03002030.9
(22) Date of filing: 28.01.2003
(51) Int. Cl.: H04L 27/26, H04L 1/06

(54) **OFDM diversity receiver and receiving method using a plurality of equalizers**

(30) Priority: 29.01.2002 KR 2002005232
(71) Applicant: Samsung Electronics Co., Ltd., Suwon-city, Gyunggi-do (KR)
(72) Inventor: Kwon, Yong-sik, Seongdong-gu, Seoul (KR)
(74) Representative: Grünecker, Kinkeldey, Stockmair & Schwanhäusser Anwaltssozietät

(57) **Abstract**

An OFDM diversity receiver has a plurality of antennas for receiving OFDM signals transmitted via multi-paths, a plurality of demodulating units which demodulate the OFDM signals received at the antennas into original signals, a plurality of equalizers which estimate a plurality of channel state information from the OFDM signals demodulated by the demodulating units and compensate distortions occurred on OFDM signal channel according to the plurality of channel state information, and an antenna adjusting unit which generates control signals in order to adjust the antennas according to the plurality of channel state information estimated by the equalizers. The antenna adjusting unit has a null detecting unit which detects nulls from the plurality of channel state information estimated by the equalizers when a channel state information is considered as a null if the channel state information is smaller than a predetermined threshold, a null counting unit which counts the number of the nulls detected at the same position among the nulls detected in the null detecting unit, and a controller which generates the control signals in order to adjust the antennas so that the number of nulls counted in the null counting unit can be minimized. The SNR of each sub-carrier of the OFDM signals combined in the combiner can be maintained high.

## Description

The present invention relates to an OFDM(Orthogonal Frequency Division Multiplexing) diversity receiver system, in particular to an OFDM diversity receiver for accomplishing optimal signal receiving performance to prevent the transmission quality from being degraded by fading when OFDM signals are transmitted in multi-carrier transmission scheme.

Generally, a broadcasting system for HDTV(High Definition Television) can be largely divided into an image coding portion and a modulation portion. The image coding portion compresses about 1Gbyte data obtained from a high definition image source into 15∼18 Mbyte data. The modulation portion transmits tens of Mbyte digital data to a receiver through a 6∼8 MHz band-limited channel.

Generally, a digital HDTV broadcasting scheme adopts a ground simultaneous broadcasting scheme using channels of VHF(Very High Frequency)/UHF(Ultra High Frequency) band allocated to the conventional TV broadcasting scheme. Therefore, under the circumstance of the ground simultaneous broadcasting, a modulation method for the HDTV broadcasting system should satisfy the following conditions: First, the modulation method for the HDTV should have high spectrum efficiency to transmit tens of Mbyte digital data to a receiver through the 6∼8 MHz band-limited channel. Second, the modulation method for the HDTV should be robust to the fading where the fading can be caused by multi-paths which are formed by surrounding buildings and structures, etc. in the HDTV broadcasting. Third, the modulation method for the HDTV should be robust to same channel interference caused surely by the conventional analog TV signal. In addition, digital modulation signals of the HDTV should be capable of minimizing interference with the conventional analog TV receiver.

There are several modulation methods including a QAM(Quadrature Amplitude Modulation) and a VSBM(Vestigial Side Band Modulation) to meet the above-described conditions. Europe has adopted OFDM scheme as the next generation HDTV ground broadcasting mode to obtain double effects of improvement of transmission speed per bandwidth and protection from the interference.

The OFDM scheme is to convert a sequence of symbols input in series into a predetermined-sized block of parallel data and to multiplex the parallel data into each different sub-carrier frequency. This OFDM scheme uses multi-carriers and differs deeply from the conventional scheme using a single carrier. The multi-carriers have orthogonality each other. Orthogonality means that multiplication of any two carriers results in "0". This feature becomes a necessary condition for using multi-carriers. OFDM can be implemented by FFT(Fast Fourier Transform) and IFFT(Inverse Fast Fourier Transform). This implementation comes from the definition of the FFT and orthogonality between the carriers.

In other aspect, the OFDM scheme has advantages as described below. The ground transmission scheme of TV has channel characteristics that transmission quality depends on reflective waves generated in signal transmission, same channel interference and contiguous channel interference, etc. Subsequently, the design condition of the transmission system becomes very difficult. However, the OFDM scheme is robust to the multi-paths. Namely, the OFDM scheme can use the multi-carriers to increase symbol transmission time. This makes degradation of performance smaller to the long time echo signals, since the OFDM scheme becomes relatively insensitive to the multipath interference signals. In addition, the OFDM scheme is also robust to the existed signals and then is less effective on the same channel interference. Owing to these characteristics, SFN(Single Frequency Network) can be constructed. Here, SFN means that a single broadcasting covers a whole nation in a single frequency. In this case, the same channel interference is getting worse and then the OFDM scheme can be adopted due to its robustness to this case.

Meanwhile, OFDM signals include multi-carriers and each carrier has very narrow bandwidth. Accordingly, frequency efficiency becomes relatively better since overall spectrum shape appears almost rectangular. Another advantage of the OFDM scheme is that since the waveform of the OFDM signals is similar to the one of white Gaussian noise, the OFDM scheme has less interference than the other scheme including PAL(Phase Alteration by Line) or SECAM(Sequential Couleur a Memoire) scheme. Subsequently, different modulation methods can be applied to each carrier in the OFDM scheme for hierarchical transmission.

Meanwhile, an OFDM receiver uses a diversity technique to face with fading phenomena due to the multi-paths. The multi-paths mean that an antenna receives several transmitted signals via various paths in the air. There occur different amplitude attenuation and phase changes if the several signals are received via the various paths. The fading phenomena explain that when the signals suffered from the different amplitude attenuation and phase changes are received and combined, the powers of the signals become differed from the ones of the transmitted signals as time passes by. The diversity technique means that several signals suffered from each different fading are received and then combined properly to overcome the fading phenomena.

There are largely two kinds of the diversity technique. They are macroscopic diversity using long-term lognormal signals and microscopic diversity using short-term Rayleigh signals respectively. The microscopic diversity is divided in detail into space, polarization, angle, frequency and time diversity. The combining method of the received signals is divided into selective combining, maximal ratio combining, equal gain combining and feedback combining, etc.

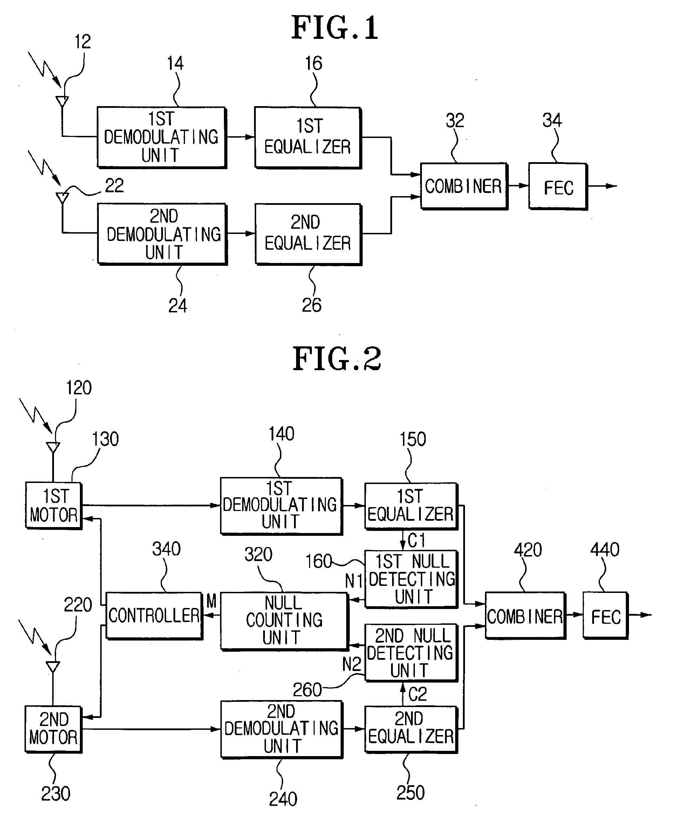

Fig. 1 is a block diagram exemplifying the conventional OFDM diversity receiver. For reference, the OFDM diversity receiver shown in Fig. 1 comprises two antennas 12, 22 for diversity, which receive OFDM signals transmitted via multi-paths respectively.

The OFDM diversity receiver comprises a first and second antennas 12, 22, a first and second demodulating unit 14, 24, a first and second equalizer 16, 26, a combiner 32 and FEC(Forward Error Corrector) 34.

The first and second antennas 12, 22 receive OFDM signals transmitted via each transmission path at preset receiving strength. The first and second demodulation ffs 14, 24 demodulate the received OFDM signals into original signals respectively. Here, the first and second demodulating units 14, 24 demodulate the received signals into the original signals by converting them into digital signals and Fast Fourier Transforming the digital signals. The first and second equalizers 16, 26 compensate distortions occurred in the Fast Fourier Transformed OFDM signals during transmission. The combiner 32 combines each OFDM signal whose distortions are compensated in the first and second equalizers 16, 26. FEC 34 detects errors using an error detection scheme preset in the data of OFDM signals and corrects the errors.

By the way, the conventional OFDM diversity receiver receives the OFDM signals at fixed receiving strength and direction of the antennas 12, 22. Subsequently, the conventional OFDM receiver is not capable of accomplishing the optimal receiving performance. In addition, since the conventional OFDM diversity receiver receives the OFDM signals at a fixed receiving strength and direction of the antennas 12, 22 without regarding environmental changes of transmission paths, it is not stable to receive the OFDM signals. In case of receiving the OFDM signals in the above-described scheme, it is difficult to recover the original signals because a ratio of the distortions included in the received OFDM signals grows and then SNR(signal-to-noise ratio) becomes smaller.

Accordingly, it is an objective of the present invention to provide an OFDM diversity receiver that can receive the OFDM signals more stably via the multi-paths.

It is another aspect of the present invention to provide an OFDM diversity receiver that can receive the OFDM signals, maintaining the SNR of the received OFDM signals maximum.

According to one aspect of the present invention, there is provided an OFDM diversity receiver comprising a plurality of antennas through which receive OFDM signals transmitted via multi-paths, a plurality of demodulating units which demodulate the OFDM signals received at the antennas into original signals, a plurality of equalizers which estimate a plurality of channel state information from the OFDM signals demodulated by the demodulating units and compensate distortions occurred on OFDM signal channel according to the plurality of channel state information, and an antenna adjusting unit which generates control signals in order to adjust the antennas according to the plurality of channel state information estimated by the equalizers.

Preferably, the antenna adjusting unit comprises a null detecting unit which detect nulls from the plurality of channel state information estimated by the equalizers when a channel state information is considered as a null if the channel state information is smaller than a predetermined threshold, a null counting unit which count the number of the nulls detected at the same position among the nulls detected in the null detecting unit, and a controller which generates the control signals in order to adjust the antennas so that the number of nulls counted in the null counting unit can be minimized.

The OFDM diversity receiver according to the present invention further comprises a combiner with which combines the OFDM signals whose distortions occurred on the channel are compensated in the equalizers and an error correcting unit which detects errors in an error detecting scheme preset on the data of the OFDM signals and corrects the errors.

According to the other aspect of the present invention, there is provided an OFDM diversity receiver comprising a plurality of antennas through which receive OFDM signals transmitted via multi-paths, a plurality of power detecting units which detect maximum power of the OFDM signals received at the antennas and generate control signals in order to adjust the antennas in response to the maximum power, a plurality of demodulating units which demodulate the OFDM signals received at the antennas into original signals, and a plurality of equalizers which estimate a plurality of channel state information from the OFDM signals demodulated by the demodulating units and compensate distortions occurred on OFDM signal channel according to the plurality of channel state information.

Preferably, the OFDM diversity receiver according to the present invention further comprises a combiner with which combines the OFDM signals whose distortions occurred on the channel are compensated in the equalizers and an error correcting unit which detects errors in an error detecting scheme preset on the data of the OFDM signals and corrects the errors.

In another aspect of the present invention, there is provided a method for receiving an OFDM signal, comprising the steps of receiving OFDM signals transmitted via multi-paths through a plurality of antennas, converting the OFDM signals into digital signals and demodulating the digital signals into original signals by Fast Fourier Transforming, estimating a plurality of channel state information on channel which the OFDM signals transmitted through and compensating distortions occurred on the channel and generating control signals according to the plurality of channel state information in order to adjust the antennas.

Preferably, the generating step comprises the steps of detecting position of nulls from the plurality of channel state information where a channel state information is considered as a null if the channel state information is smaller than a predetermined threshold; counting the number of the nulls detected at the same position among the detected nulls and generating the control signals in order to adjust the antennas so that the number of the nulls at the same position can be minimized.

The method for receiving an OFDM signal of the present invention further comprises the steps of combining the OFDM signals whose distortions occurred on the channel are compensated, detecting errors in an error detecting scheme preset on the data of the OFDM signals and correcting the errors.

In yet another aspect of the present invention, there is provided a method for receiving an OFDM signal, comprising the steps of receiving OFDM signals transmitted via multi-paths through a plurality of antennas, detecting maximum power of the OFDM signals and generating control signals in response to the maximum power in order to adjust the antennas, converting the OFDM signals into digital signals and demodulating the digital signals into original signals by Fast Fourier Transforming and estimating a plurality of channel state information on channel which the OFDM signals transmitted through and compensating distortions occurred on the channel.

The method for receiving an OFDM signal of the present invention further comprises the steps of combining the OFDM signals whose distortions occurred on the channel are compensated, detecting errors in an error detecting scheme preset on the data of the OFDM signals and correcting the errors.

According to the present invention, the SNR of each sub-carrier of the OFDM signals combined in the combiner can be maintained high by controlling the operations of a first and second motors in order to minimize the number of nulls generated in a same position, when the nulls are detected from CSI(Channel State Information) of the OFDM signals received at the first and second antennas respectively. Also, as the powers of the received OFDM signals become larger with the receiving strength of the first and second antennas raised, the recovery of the original signals from the received OFDM signals may become easier.

The above-described objectives and features of the present invention can be clarified by describing preferred embodiments in detail with the accompanying drawings:
Fig. 1 is a block diagram exemplifying the conventional OFDM diversity receiver.
Fig. 2 is a block diagram showing a first preferred embodiment of the OFDM diversity receiver according to the present invention.
Fig. 3 is a block diagram showing a second preferred embodiment of the OFDM diversity receiver according to the present invention.
Fig. 4 is a flow chart showing a first preferred embodiment of the OFDM signal receiving method using the OFDM diversity receiver according to the present invention.
Fig. 5 is a flow chart showing in detail a step of adjusting receiving strength shown in the Fig. 4.
Fig. 6 is a flow chart showing a second preferred embodiment of the OFDM signal receiving method using the OFDM diversity receiver according to the present invention.

Preferred embodiments of the present invention will now be described with reference to the accompanying drawings.

Fig. 2 is a block diagram showing a first preferred embodiment of the OFDM diversity receiver according to the present invention. The OFDM diversity receiver according to the first preferred embodiment comprises two antennas 120, 220 for use in diversity.

The OFDM diversity receiver comprises a first and second antenna 120, 220, a first and second motors 130, 230, a first and second demodulating units 140, 240, a first and second equalizers 150, 250, a combiner 420 and FEC 440.

The first and second antennas 120, 220 receive the OFDM signals transmitted via multi-paths respectively. The first and second motors 130, 230 adjust the receiving strength of the first and second antennas 120, 220 according to control signals. Here, the amplitudes and periodicities of the received OFDM signals appear differently according to the adjustment of the receiving strength of the first and second motors 130, 230. The first and second demodulating units 140, 240 demodulate each OFDM signal received at the first and second antennas 120, 220 with the adjusted receiving strength by the first and second motors 130, 230 into original signals. The first and second demodulating units 140, 240 convert each OFDM signal into digital signals respectively and then Fast Fourier Transform the digital signals.

The first and second equalizers 150, 250 compensate distortions occurred during transmission in each OFDM signal Fast Fourier Transformed in the first and second demodulating units 140, 240. The first and second equalizers 150, 250 detect from each OFDM signal the CSI C1, C2 on the channel through which each OFDM signal is transmitted and compensate distortions occurred in the OFDM signals during transmission using each detected CSI C1, C2.

The combiner 420 combines each OFDM signal whose distortions occurred during transmission are compensated by the first and second equalizer 150, 250. The combiner 420 compensates distortions due to nulls of the OFDM signals by compensating nulls generated in one OFDM signal received at any one of the first and second antennas 120, 220 with the other OFDM signal received at the other one of the first and second antennas 120, 220. FEC 440 detects errors in an error detection scheme preset to the data of OFDM signals and then corrects the errors.

The OFDM diversity receiver according to the present embodiment further comprises a first and second null detecting units 160, 260. Subsequently, the first and second null detecting units 160, 260 compare the CSI C1, C2 detected in the first and second equalizer 150, 250 with a predetermined threshold to determine each one as null in case that the CSI C1, C2 are smaller than the threshold respectively. The first and second null detecting units 160, 260 detect positions of nulls from the CSI C1, C2 compared with the threshold respectively and provide information on the detected positions of nulls to null counting unit 320. The null counting unit 320 compares the position information N1, N2 provided by the first and second null detecting units 160, 260, and counts the number of nulls generated at the same position and provides null matching counting information M containing the number of nulls generated at the same position to the controller 340. The controller 340 controls the first and second motors 130, 230 in order to adjust the receiving strength of the first and second antennas 120, 230 to make the number of nulls generated at the same position minimized with the null matching counting information M provided by the null counting unit 320.

Accordingly, the SNR of each sub-carrier of OFDM signals combined by the combiner 420 can be maintained high by detecting nulls with the CSI of each OFDM signal received at the first and the second antennas 120, 220 and controlling the operations of the first and second motors 130, 230 in order to make the number of nulls generated at the same position minimized.

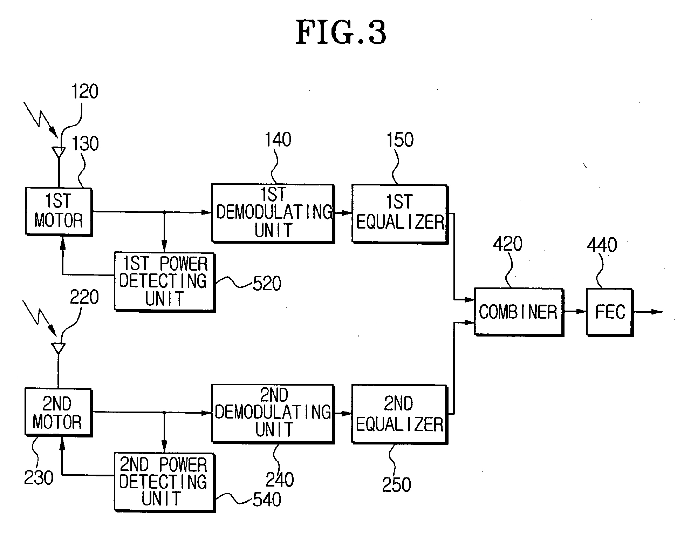

Fig. 3 is a block diagram showing a second preferred embodiment of the OFDM diversity receiver according to the present invention. The descriptions of the same reference numbers of the Fig. 3 as those ones of the Fig. 2 are abbreviated.

The OFDM diversity receiver of the present embodiment comprises a first and second antennas 120, 220, a first and second motors 130, 230, a first and second power detecting units 520, 540, a first and second demodulating units 140, 240, a first and second equalizers 150, 250, a combiner 420 and FEC 440.

The first and second antennas 120, 220 receive the OFDM signals transmitted via the multi-paths respectively. The first and second motors 130, 230 adjust the receiving strength of the first and second antennas 120, 220 according to control signals. The first and second power detecting units 520, 540 detect powers with amplitudes of the OFDM signals received at the first and second antennas 120, 220. Here, the first and second power detecting units 520, 540 detect the maximum power among detected powers and control the operations of the first and second motors 130, 230 so that the receiving strength of the first and second antennas 120, 220 can maintain the detected power as maximum. Subsequently, the power of the OFDM signals received at the first and second antennas 120, 220 whose receiving strength is maintained as maximum becomes larger.

The first and second demodulating units 140, 240 convert each OFDM signal received at the first and second antennas 120, 220 having maximum power into digital signals and Fast Fourier Transform the digital signals. The first and second equalizers 150, 250 detect the CSI from the Fast Fourier Transformed OFDM signals and compensate distortions occurred in the transmitted OFDM signals (during transmission) according to the CSI. The combiner 420 combines each OFDM signal whose distortions occurred on the transmission channel are compensated by the first and second equalizers 150, 250. FEC 440 detects errors in the data of OFDM signals combined in the combiner 420 and corrects the errors.

Accordingly, as the power of the received OFDM signals becomes larger with the receiving strength of the first and the second antennas raised, the recovery of the original signals from the received OFDM signals may become easier.

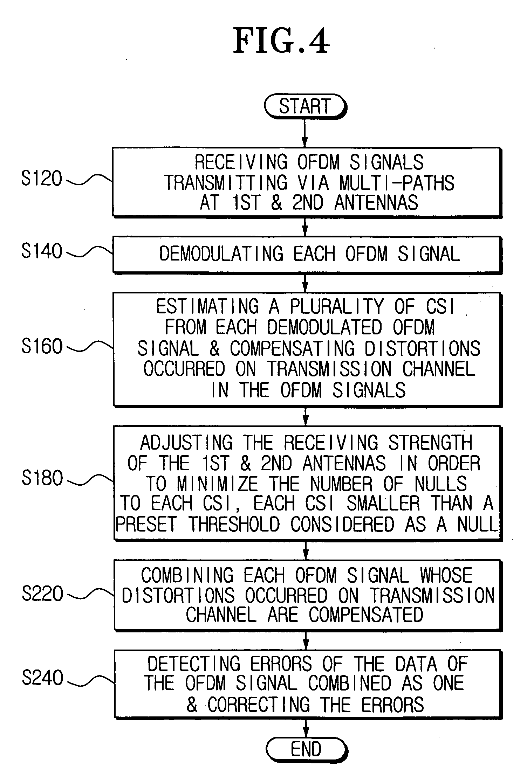

Fig. 4 is a flow chart showing a first preferred embodiment of an OFDM signal receiving method using the OFDM diversity receiver according to the present invention. First, the OFDM receiver receives OFDM signals transmitted via multi-paths respectively (step S120). The first and second demodulating units 140, 240 convert each OFDM signal received at the first and second antennas 120, 220 into digital signals, Fast Fourier Transform the digital signals and then recover original signals. The first and second equalizers 150, 250 estimate the CSI C1, C2 from each demodulated OFDM signal (step S160). The first and second equalizers 150, 250 also compensate distortions occurred in each transmitted OFDM signal (during transmission) based on the estimated CSI C1, C2 (step S160).

The OFDM diversity receiver of the present embodiment controls the receiving strength of the first and second antennas 120, 220 in order to minimize the number of nulls generated at the same position, when each CSI C1, C2 is considered as null in case that the CSI C1, C2 estimated by the first and second equalizers 150, 250 are smaller than a preset threshold (step S180). The combiner 420 combines each OFDM signal whose distortions occurred on the transmission channel are compensated by the first and second equalizers 150, 250 (step S220). FEC 440 detects errors from the data of OFDM signals combined in the combiner 420 and corrects the errors (step S240).

Accordingly, the SNR of each OFDM signal combined by the combiner 420 can be raised by adjusting the receiving strength of the first and second antennas 120, 220 in order to detect the null positions from each CSI and make the number of nulls generated at the same position minimized.

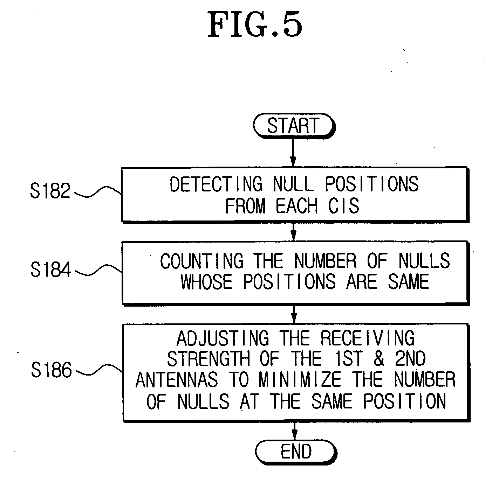

Fig. 5 is a flow chart showing the step of S180 of Fig. 4 in detail. First, the first and second null detecting units 160, 260 detect null positions where each CSI C1, C2 estimated by the first and second equalizer 150, 250 is smaller than the preset threshold (step S182). The first and second null detecting units 160, 260 provide the null position information N1, N2 to a null counting unit 320. The null counting unit 320 counts the number of nulls generated at the same position using the null position information N1, N2 provided by the first and second null detecting units 160, 260 (step S184). The null counting unit 320 provides the counted number of null information M to the controller 340. The controller 340 adjusts the receiving strength of the first and second antennas 120, 220 in order to make the number of nulls at the same position minimized based on the number of null information M provided by the null counting unit 320 (step S186).

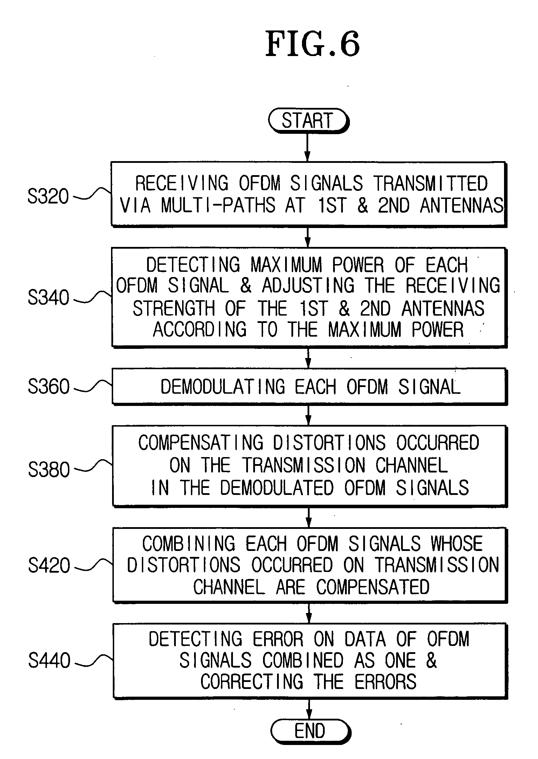

Fig. 6 is a flow chart showing a second preferred embodiment of an OFDM signal receiving method using the OFDM diversity receiver according to the present invention. First, the OFDM receiver receives the OFDM signals transmitted via multi-paths respectively (step S320). The first and second power detecting units 520, 540 detect powers of the OFDM signals received at the first and second antennas 120, 220. Here, the first and second power detecting units 520, 540 detect the maximum power among detected powers. Subsequently, the first and second power detecting units 520, 540 control the operations of the first and second motors 130, 230 in order to adjust the receiving strength of the first and second antennas 120, 220 in response to the maximum power.

Meanwhile, the first and second demodulating units 140, 240 convert each OFDM signal received at the first and second antennas 120, 220 into digital signals, Fast Fourier Transform the digital signals and then recover the original signals (step S360). The first and second equalizers 150, 250 estimate CSI C1, C2 from each demodulated OFDM signals and also compensate distortions occurred in each transmitted OFDM signals (during transmission) based on the CSI C1, C2 (step S380). The combiner 420 combines each OFDM signal whose distortions occurred on the transmission channel are compensated by the first and second equalizers 150, 250 (step S420). FEC 440 detects errors from the data of OFDM signals combined as a single signal in the combiner 420 and corrects the errors (step S440).

Accordingly, as the power of the received OFDM signals becomes larger with the receiving strength of the first and the second antennas raised, the recovery of the original signals from the received OFDM signals may become easier.

According to the present invention, the SNR of each sub-carrier of the OFDM signals combined in the combiner can be maintained high by controlling the operations of the first and second motors in order to minimize the number of nulls generated in the same position, when nulls are detected with the CSI of the OFDM signals received at the first and the second antennas respectively.

Also, as the power of the received OFDM signals becomes larger with the receiving strength of the first and the second antennas raised, the recovery of the original signals from the received OFDM signals may become easier.

Additional advantages and modifications will readily occur to those skilled in the art. Therefore, the invention in its broader aspects is not limited to the specific details, representative devices, and illustrated examples shown and described herein..

## Claims

1. An OFDM diversity receiver comprising:
a plurality of antennas (120, 220) for receiving OFDM signals transmitted via multi-paths;
a plurality of demodulating units (140, 240) for demodulating the OFDM signals received at the antennas into original signals;
a plurality of equalizers (150, 250) for estimating a plurality of channel state information from the OFDM signals demodulated by the demodulating units and compensate distortions occurred on OFDM signal channel according to the plurality of channel state information; and
an antenna adjusting unit for generating control signals to adjust the antennas according to the plurality of channel state information estimated by the equalizers.

2. The OFDM diversity receiver according to claim 1, wherein the antenna adjusting unit comprises:
a null detecting unit (160, 260) for detecting position of nulls from the plurality of channel state information estimated by the equalizers, with the channel state information smaller than a predetermined threshold being considered as the null;
a null counting unit (320) for counting the number of the nulls detected at the same position among the nulls detected in the null detecting unit; and
a controller (340) for generating the control signals in order to adjust the antennas so that the number of nulls counted in the null counting unit can be minimized.

3. The OFDM diversity receiver according to claim 2 or 3, further comprising a combiner (420) for combining the OFDM signals whose distortions occurred on the channel are compensated in the equalizers.

4. The OFDM diversity receiver according to claim 3, further comprising an error correcting unit (440) for detecting errors in an error detecting scheme preset on the data of the OFDM signals and correcting the errors.

5. An OFDM diversity receiver comprising:
a plurality of antennas (120, 220) for receiving OFDM signals transmitted via multi-paths;
a plurality of power detecting units (520, 540) for detecting maximum power of the OFDM signals received at the antennas and generating control signals in order to adjust the antennas in response to the maximum power:
a plurality of demodulating units (140, 240) for demodulating the OFDM signals received using the antennas into original signals; and
a plurality of equalizers (150, 250) for estimating a plurality of channel state information from the OFDM signals demodulated by the demodulating units and compensating distortions occurred on OFDM signal channel according to the plurality of channel state information.

6. The OFDM diversity receiver according to claim 5, further comprising a combiner (420) for combining the OFDM signals whose distortions occurred on the channel are compensated in the equalizers.

7. The OFDM diversity receiver according to claim 6, further comprising an error correcting unit (440) for detecting errors in an error detecting scheme preset on the data of the OFDM signals and corrects the errors.

8. A method for receiving an OFDM signal, comprising:
receiving OFDM signals transmitted via multi-paths using a plurality of antennas;
converting the OFDM signals into digital signals and demodulating the digital signals into original signals by Fast Fourier Transforming;
estimating a plurality of channel state information on channel which the OFDM signals transmitted through and compensating distortions occurred on the channel; and
generating control signals according to the plurality of channel state information in order to adjust the antennas.

9. The method according to claim 8, wherein the generating of control signals comprises the steps of:
detecting position of nulls from the plurality of channel state information, with the channel state information smaller than a predetermined threshold considered as being the null;
counting the number of the nulls detected at the same position among the detected nulls; and
generating the control signals in order to adjust the antennas so that the number of the nulls at the same position can be minimized.

10. The method according to claim 9, further comprising combining the OFDM signals whose distortions occurred on the channel are compensated.

11. The method according to claim 10, further comprising detecting errors in an error detecting scheme preset on the data of the OFDM signals and correcting the errors.

12. A method of receiving an OFDM signal, comprising:
receiving OFDM signals transmitted via multi-paths using a plurality of antennas;
detecting maximum power of the OFDM signals and generating control signals in response to the maximum power in order to adjust the antennas;
converting the OFDM signals into digital signals and demodulating the digital signals into original signals by Fast Fourier Transforming; and
estimating a plurality of channel state information on channel which the OFDM signals transmitted through and compensating distortions occurred on the channel.

13. The method according to claim 12, further comprising combining the OFDM signals whose distortions occurred on the channel are compensated.

14. The method according to claim 13, further comprising detecting errors in an error detecting scheme preset on the data of the OFDM signals and correcting the errors.
